# FASCICULE DE BREVET EUROPEEN

(11) **EP 1 727 613 B1**
(45) Date de publication et mention de la délivrance du brevet: **08.09.2010**
(21) Numéro de dépôt: 05736520.7
(22) Date de dépôt: 01.03.2005
(51) Int. Cl.: B01D 65/02

(54) **PROCEDE DE NETTOYAGE DE MEMBRANES DE FILTRATION, ET INSTALLATION POUR LA MISE EN OEUVRE DE CE PROCEDE.**
MEMBRANFILTERREINIGUNGSVERFAHREN UND ANLAGE ZUR DURCHFÜHRUNG DESSELBEN
MEMBRANE FILTER CLEANING METHOD AND INSTALLATION FOR IMPLEMENTING SAME

(30) Priorité: 10.03.2004 FR 0402492
(43) Date de publication de la demande: 06.12.2006
(73) Titulaire: DEGREMONT, 92500 Rueil-Malmaison (FR)
(72) Inventeur: BONNELYE, Véronique, F-78700 CONFLANS SAINTE HONORINE (FR); PETRY, Marc, F-78400 CHATOU (FR); COLAS, Frédéric, F-27140 SAINT DENIS LE FERMENT (FR)
(74) Mandataire: Michardière, Bernard
(86) Numéro de dépôt international: PCT/FR2005/000486
(87) Numéro de publication internationale: WO 2005/097306

(56) Documents cités:
- FR-A- 2 668 078
- US-A1- 2004 007 255
- US-A1- 2004 007 525
- PATENT ABSTRACTS OF JAPAN vol. 2003, no. 06, 3 juin 2003 (2003-06-03) & JP 2003 053160 A (MITSUBISHI RAYON CO LTD), 25 février 2003 (2003-02-25)

## Description

L'invention est relative à un procédé de nettoyage de membranes de filtration en fibres creuses à peau interne montées à l'intérieur d'un carter, avec délimitation d'un compartiment concentrat où s'accumulent les matières retenues tant en suspension que sur les membranes, et d'un compartiment perméat collectant le liquide filtré.

La filtration de liquides, notamment d'eau, génère un gâteau composé de particules et fractions de solutés retenues par la membrane. Ce gâteau de filtration peut être à l'origine d'un colmatage de la membrane, qui se matérialise par une augmentation de pression transmembranaire à débit de perméat constant, ou par une baisse de débit de perméat à pression transmembranaire constante.

Des procédés de réduction du colmatage sont employés pour éliminer ce gâteau de filtration. Une contre perméation est généralement réalisée, avec introduction de perméat en sens inverse du sens de filtration appliqué en production, le gâteau de filtration étant ainsi entraîné par l'écoulement monophasique de liquide. Ces procédés ont toutefois une efficacité limitée dans le temps, qui peut conduire à la formation d'un gâteau de filtration résistant à ces procédés de décolletage. Cette situation conduit à la mise en oeuvre d'autres procédés, dits de régénération chimique, qui impliquent l'emploi de réactifs chimiques coûteux et polluants et qui exigent du temps pour la réalisation de ces lavages (surcoût d'exploitation). Les arrêts de production ainsi réalisés et les pertes d'eaux générées nécessitent un surdimensionnement de l'installation pour assurer le débit nominal de production, d'où un surcoût d'investissement.

De nombreuses propositions ont été effectuées pour améliorer les procédés de nettoyage ou de décolmatage hydraulique des membranes.de filtration.

La demande de brevet japonais JP 100089842, déposée le 25 février 1994, décrit un procédé de rétro-lavage simple comprenant les étapes consistant à :
- vider le compartiment concentrat pour évacuer le liquide à filtrer qu'il contient et les matières en suspension, puis
- effectuer un rétro-lavage par passage de liquide du compartiment perméat vers le compartiment concentrat au travers des membranes pour décoller et évacuer les impuretés déposées sur celles-ci, tout en faisant circuler un gaz dans le concentrat.

Selon ce document, on prévoit donc une injection d'air côté concentrat, complétée par une injection d'eau en sens inverse du sens de filtration, l'air étant introduit par une extrémité de la membrane, et le gâteau de filtration éliminé par le côté opposé. Ce procédé permet d'améliorer le décolmatage des membranes d'ultrafiltration. Toutefois, son efficacité demande à être augmentée et maintenue dans le temps.

On connaît également d'après FR-A-2 668 078 un procédé qui utilise de l'eau filtrée, additionnée ou non de chlore, envoyée en sens contraire de la filtration avec alternance de différentes phases afin d'améliorer le décollement et l'évacuation des matériaux formant le gâteau de filtration. Là encore, l'efficacité du procédé demande à être améliorée.

L'invention a pour but, surtout, de fournir un procédé de nettoyage de membranes de filtration qui permet de réduire la durée de la procédure de décolmatage et qui assure une augmentation et une durée du gain de perméabilité, tout en restant simple et économique à mettre en oeuvre.

Selon l'invention, un procédé de nettoyage de membranes de filtration en fibres creuses à peau interne, montées à l'intérieur d'un carter pour la filtration d'un liquide, avec délimitation d'un compartiment concentrat où s'accumulent les matières retenues tant en suspens ion que sur les membranes, et d'un compartiment perméat collectant le liquide filtré, comprend les étapes consistant à :
a) vider le compartiment concentrat pour évacuer le liquide à filtrer qu'il contient et les matières en suspension, puis
b) effectuer un rétro-lavage par passage de liquide du compartiment perméat vers le compartiment concentrat au travers des membranes pour décoller et évacuer les impuretés déposées sur celles-ci tout en faisant circuler un gaz dans le concentrat,
   et est **caractérisé en ce que** des pulsations du gaz et/ou du liquide de rétro-lavage sont provoquées pendant au moins une phase du rétro-lavage.

Le nombre de pulsations au cours d'un rétro-lavage peut être de 1 à 10. La durée des pulsations peut être de 2 à 60 secondes, de même que l'intervalle entre deux pulsations peut lui-même durer de 2 à 60 secondes.

De préférence, le liquide de lavage est injecté de façon pulsée, à partir du compartiment perméat vers le compartiment concentrat alors que la circulation de gaz, notamment d'air, est constante dans le compartiment concentrat. En variante, le gaz peut être injecté de façon pulsée dans le compartiment concentrat, alors que la circulation de liquide est constante dans le concentrat.

Lors du rétro-lavage, la vitesse de passage du liquide à l'intérieur des fibres creuses peut être de 0,1 à 1 m³/m².s (généralement exprimé sous forme de vitesse en m/s), tandis que la vitesse de passage du gaz peut être de 0 à 4 Nm³/m².s (4 m/s).

L'étape de vidange du compartiment concentrat peut comporter l'utilisation d'un débit de gaz pour accélérer et améliorer la vidange.

Généralement, le liquide à filtrer (phase de production) est de l'eau, alors que le liquide utilisé pour le rétro-lavage est de l'eau filtrée; tandis que le gaz que l'on fait circuler est de l'air.

Le liquide filtré injecté lors du rétro-lavage vers le compartiment concentrat au travers des membranes peut être préalablement additionné de l'un des produits suivants : agent désinfectant, agent d'oxydation, (par exemple hypochlorite, di-oxyde de chlore, peroxydes etc), composé chimique acide, voire basique.

De préférence, le rétro-lavage comprend au moins un cycle de deux phases, à savoir une phase avec deux fluides, liquide et gaz, dont l'un est pulsé, et une autre phase avec celui des fluides qui n'est pas pulsé. Le nombre de cycles de deux phases au cours d'un même rétro-lavage peut être compris entre 1 et 10.

L'invention est également relative à une installation pour la mise en oeuvre du procédé défini précédemment ; cette installation comprend des membranes de filtration montées à l'intérieur d'un carter, avec délimitation d'un compartiment concentrat et d'un compartiment perméat, une pompe d'alimentation et une vanne d'alimentation du compartiment concentrat, une vanne de vidange, une pompe de rétro-lavage et une vanne de rétro-lavage, un surpresseur de gaz relié au *compartiment concentrat,* et est ***caractérisée en ce que** :*
- les membranes de filtration sont en fibres creuses à peau interne,
- une électrovanne est montée sur une canalisation reliant le surpresseur de gaz à un orifice connecté à l'espace intérieur des fibres creuses,
- et en ce qu'elle comporte un circuit d'alimentation par impulsions électriques de l'électrovanne pour commander des pulsations du débit de gaz.

L'invention consiste, mises à part les dispositions exposées ci-dessus, en - un certain nombre d'autres dispositions dont il sera plus explicitement question ci-après à propos d'un exemple de réalisation décrit avec référence aux dessins annexés, mais qui n'est nullement limitatif.

Sur ces dessins :
Fig.1 est un schéma d'une installation de filtration mettant en oeuvre le procédé selon l'invention.
Fig.2 est un schéma partiel du fonctionnement en mode filtration.
Figs.3 à 6 illustrent sous forme de schémas partiels, quatre phases successives du rétro-lavage à l'eau avec pulsation d'air.
Figs.7 à 10 illustrent, sous forme de schémas partiels, quatre phases successives du rétro-lavage à l'air avec pulsation d'eau.
Fig.11 est un diagramme de fonctionnement d'un rétro-lavage avec trois pulsations ; le temps est porté en abscisses et le rapport débit/débit maximum de la séquence est porté en ordonnées.
Fig.12. est un diagramme comparatif des rejets de différents modes de rétro-lavage avec le temps porté en abscisses ; en ordonnées sont portés le flux d'eau en rétro-lavage selon la courbe en trait plein, et. la concentration en matières en suspension, exprimée en mg/l, selon les courbes en pointillé et en tirets, et
Fig.13. est un diagramme comparatif des différents modes de rétro-lavage avec la durée de fil tration exprimée en semaines portée en abscisses, et la perméabilité en filtration exprimée 1 / h.m2. bar en ordonnées.

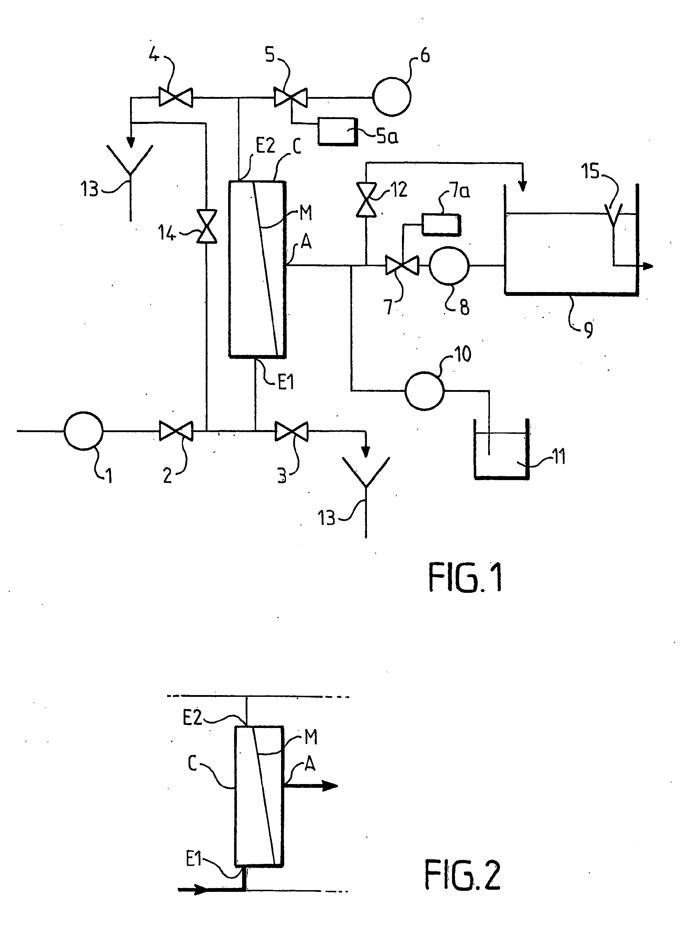

En se reportant aux dessins, notamment à Fig.1, on peut voir une installation pour la mise en oeuvre d'un procédé selon l'invention de décolmatage de membranes de filtration, ultrafiltration, microfiltration, nanofiltration ou hyperfiltration. L'ensemble M de membranes, représenté schématiquement sur Fig.1, est de géométrie tubulaire, et est mis en oeuvre dans un carter C regroupant un ensemble de fibres creuses à peau interne. Le carter C est équipé de deux orifices E1, E2, respectivement bas et haut, pouvant servir de sorties et/ou entrées. Les orifices E1, E2 sont connectés au compartiment concentrat formé par l'espace intérieur des fibres creuses. A l'intérieur du carter, l'espace situé autour des membranes, et entre elles, forme le compartiment perméat qui comporte une sortie A en position médiane par rapport à la hauteur du module. En variante, la sortie A peut être axiale par rapport au diamètre du module.

Les membranes M sont utilisées pour la filtration de liquides, typiquement de l'eau, et la rétent ion de particules ou solutés de poids moléculaires supérieurs au seuil de coupure des membranes considérées.

L'installation comporte une pompe d'alimentation 1 du liquide à filtrer dont le refoulement est relié, par l'intermédiaire d'une vanne d'alimentation 2, à l'orifice E1. Un branchement de vidange entre la vanne 2 et l'orifice E1 est muni d'une vanne de vidange 3. La canalisation située en aval de la vanne 3 débouche dans un dispositif 13 d'évacuation des rejets.

Une vanne 4 de rejet de rétro-lavage tête haute est reliée à l'orifice E2 du carter C. Une canalisation en aval de la vanne 4 débouche dans le dispositif 13.

Une vanne 5 est montée sur une canalisation reliant un surpresseur 6 de gaz, notamment d'air, à l'orifice E2. Une vanne de rétro-lavage 7 est disposée sur une canalisation reliant la sortie d'une pompe de rétro-lavage 8 à l'orifice A. L'aspiration de la pompe 8 est reliée à un réservoir 9 de liquide filtré. Une pompe 10 a son aspiration reliée à un- bac 11 contenant un adjuvant, par exemple une solution désinfectante, oxydante (par exemple, hypochlorite, di-oxyde...), ou encore un composé chimique acide, voire basique. Le refoulement de la pompe 10 est relié à une partie de canalisation située entre la vanne 7 et l'entrée A.

Une vanne 12 de production, ou de recirculation du rétro-lavage, est disposée sur une canalisation située entre la vanne 7 et l'orifice A. La vanne 12 est reliée en aval à une canalisation qui débouche dans le réservoir 9 d'eau filtrée. Un trop plein 15 est prévu pour évacuation de l'eau traitée vers l'utilisation.

Les différentes vannes de l'installation sont des électrovannes dont la plupart des circuits de commande n'ont pas été représentés par simplification..

L'électrovanne 5 du surpresseur de gaz et ou l'électrovanne 7 de rétro-lavage sont associées à un moyen de commande électrique par impulsions 5a, 7a permettant une séquence prédéterminée d'ouvertures et de fermetures de la vanne. Les pulsations peuvent être mises en oeuvre par le moyen des vannes 5 et 7, associées à des dispositif de distribution tels que :
- des démarreurs ou des variateurs électroniques sur les pompes 6 et 8, ou
- des circuits de recyclage, avec par exemple ouverture syncopée de la vanne 12

Le fonctionnement de l'installation selon le procédé de l'invention est le suivant.

En mode filtration, illustré par Fig.2, la pompe 1 est en action et les vannes 2 et 12 sont ouvertes tandis que toutes les autres vannes sont fermées. Le liquide à traiter entre par l'orifice E1 et le liquide filtré (perméat) sort par l'orifice A pour être dirigé vers le réservoir 9.

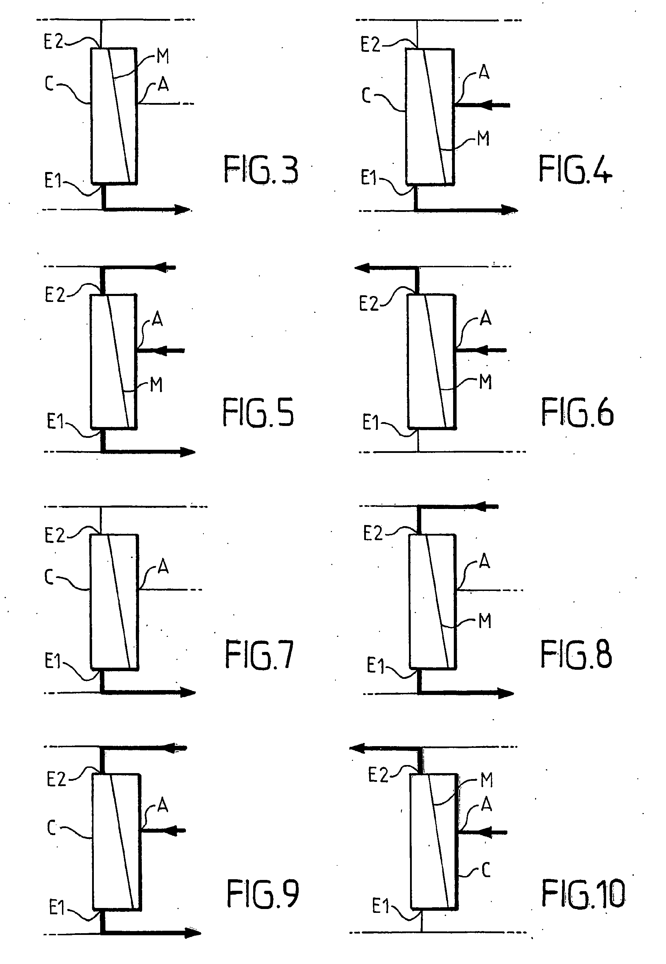

L'opération de nettoyage par rétro-lavage de la membrane M peut s'effectuer à l'eau avec pulsation d'air selon les étapes des Figs. 3 à 6.

D'une manière générale, sur les schémas, les conduites dans lesquelles a lieu un écoulement de fluide sont représentées par un trait plus épais, avec une flèche indiquant le sens de l'écoulement.

Le schéma de Fig.3. correspond à une phase de vidange gravitaire du concentrat. La pompe 1 (Fig.1) est arrêtée, la vanne 2 est fermée alors que la vanne 3 est ouverte, les autres vannes sont fermées, les pompes 8 et 10 sont à l'arrêt.

La phase de vidange de Fig.3. dure de 5 à 60 secondes.

En option, cette vidange gravitaire peut être assistée par injection de gaz, avec ouverture de la vanne 5 et admission du gaz par l'orifice E2.

Les phases suivantes des Figs.4 et 5, dont la succession dans le temps peut être inversée *(séquence 3 - 4 - 5 ou 3 - 5 - 4)*, constituent un cycle qui peut être répété plusieurs fois.

La phase illustrée par Fig.4. correspond à une injection d'eau filtrée de rétro-lavage par l'orifice A, la pompe 8 étant mise en action et la vanne 7 étant ouverte. La vidange s'effectue par l'orifice E1 et la vanne 3 ouverte.

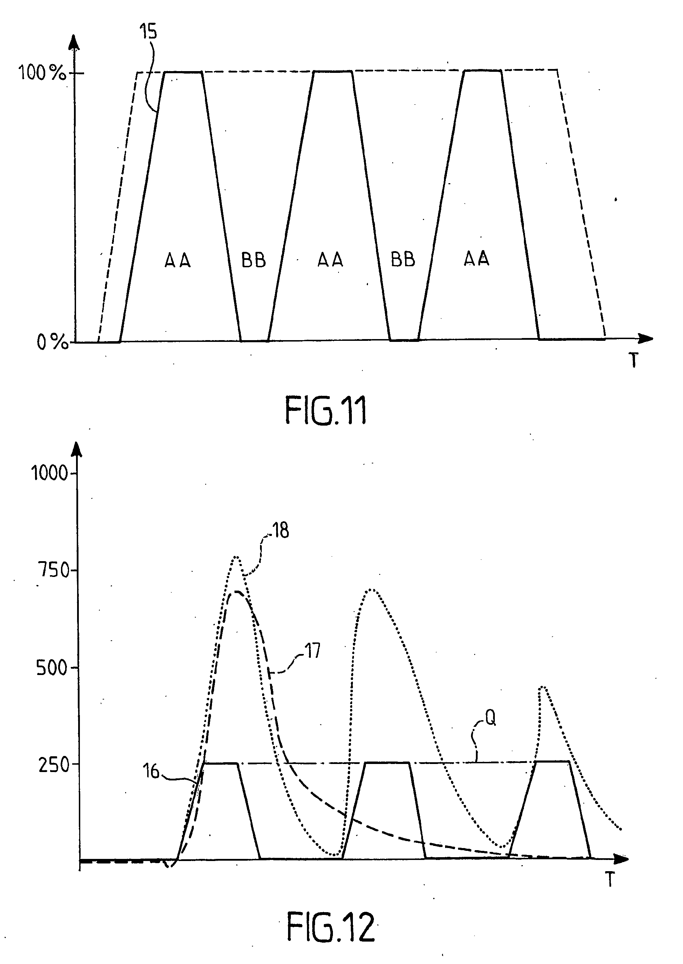

La phase illustrée par Fig.5 correspond à une injection d'eau filtrée de rétro-lavage avec, selon l'invention, pulsation d'air. L'eau de rétro-lavage est toujours injectée par l'orifice A. En outre, l'électrovanne 5 est successivement ouverte et fermée par une série d'impulsions auxquelles correspondent les créneaux 15 de Fig.11 et 16 de Fig.12, d'allure trapézoïdale dans cet exemple (mais pouvant aussi bien être carrée, triangulaire ou sinusoïdale).

De façon surprenante, la succession des phases transitoires créées par les pulsations d'air augmente de façon significative l'élimination du gâteau de filtration par rapport à un écoulement constant.

Le flux d'eau pendant le rétro-lavage est typiquement de 100 à 850 l/h.m² (litres par heure et par m² de surface membranaire). Les valeurs préférées sont comprises entre 250 et 400 l/h.m².

La vitesse de l'air dans le compartiment concentrat est typiquement de 0 à 4 Nm³/m².s. Les valeurs préférées sont comprises entre 0 et 1 Nm³/m².s. *(la vi tesse nulle correspondant aux périodes de rétro-lavage monophasique)*.

La durée de la phase eau + air est typiquement de 2 à 60 secondes. Les valeurs préférées sont comprises entre 5 et 30 secondes. La durée de la phase « eau seule » est typiquement de 2 à 60 secondes, les valeurs préférées étant également comprises entre 5 et 30 secondes.

La phase suivante illustrée par Fig.6. correspond à la fin du rétro-lavage avec injection d'eau filtrée par l'orifice A, remise en eau du carter C ; toutes les vannes sont fermées à l'exception de la vanne 7 et de la vanne 4 qui permet la purge du carter C.

Les schémas des Figs.7 à 10 illustrent une variante de fonctionnement correspondant à un rétro-lavage à l'air avec pulsation d'eau.

La phase de vidange illustrée par Fig.7. est identique à celle de Fig.3.

Les phases suivantes des Figs.8 et 9 constituent le cycle de rétro-lavage AA + BB (tel que défini Fig. 11), qui peut être répété plusieurs fois.

La phase illustrée par Fig.8. correspond à un rétro-lavage à l'air seul. La vanne 5 (Fig.1) est ouverte pour l'admission d'air par E2 et la vanne 3 est également ouverte pour l'évacuation du gâteau de filtration. Les autres vannes sont fermées, en particulier la vanne 7.

Selon la phase illustrée par Fig.9, la circulation d'air se poursuit comme illustré sur Fig.8 mais, en plus, de l'eau filtrée est injectée par l'orifice A avec des pulsations produites par ouvertures et fermetures successives de l'électrovanne 7 (Fig.1), la pompe 8 étant en action. Aux pulsations d'eau de rétro-lavage correspondent les créneaux 15 et 16 sur Figs.11 et 12.

La dernière phase illustrée par Fig.10. est identique à celle de Fig.6. et correspond à une injection d'eau filtrée avec remise en eau et purge.

Au cours d'une opération de nettoyage, les cycles correspondant aux phases des Figs.4 et 5 ou des Figs.8 et 9 peuvent être répétés plusieurs fois. Le nombre de cycles peut varier de 1 à 10. Le nombre de cycles sera de préférence de 2 à 7.

Fig.11 est un diagramme illustrant le fonctionnement. En abscisses est porté le temps T, et en ordonnées le rapport (exprimé en pourcent) du débit du fluide considéré au débit maximum de ce fluide au cours de la séquence.

Les zones marquées « AA » correspondent à des pulsations, alors que les intervalles sont marqués « BB » ; les pulsations sont diphasiques avec injection simultanée de gaz et d'eau, alors que les injections sont monophasiques, soit gaz, soit eau : la forme trapézoïdale des pulsations sur Fig. 11 n'est qu'indicative ; elle pourrait aussi bien être carrée, triangulaire ou sinusoïdale. Sur cette même Fig.11, l'enveloppe en pointillé représente l'injection continue d'un des fluides de lavage, en général l'eau, et les « dents de scie » 15 correspondent à l'introduction du second fluide, en général le gaz : il y a donc bien des périodes au cours desquelles le second fluide est arrêté, donc à débit nul, ce qui justifie la gamme de vitesse de 0 à 4 m / s.

Dans l'exemple correspondant à Fig.11, trois pulsations sont prévues pour un cycle.

Fig.12 est un diagramme comparatif des rejets de différents modes de rétro-lavage. Le temps T est porté en abscisses. En ordonnées sont portées les concentrations en matières en suspension dans les rejets exprimées en mg/l. La courbe 17 en tirets correspond à un rétro-lavage à l'air et à l'eau, sans pulsation, pour un flux Q d'eau en rétro-lavage constant correspondant aux sommets des créneaux 16. La courbe 18 en pointillé correspond aux concentrations des matières en suspension dans les rejets lors d'un rétro-lavage à l'air avec eau pulsée, selon les créneaux 16.

Ces créneaux 16 représentent le flux d'eau en rétro-lavage porté en ordonnées et exprimé en l/h.m² (litres par heure et par m²) en fonction du temps T porté en abscisse. La courbe 17 montre que la phase efficace du rétro-lavage à l'air et à l'eau sans pulsation est limitée dans le temps à une très courte période. L'analyse du phénomène a permis de conclure que le mélange air et eau tend très rapidement vers un régime stabilisé de type écoulement en anneau.

Les pulsations 16 selon la présente invention favorisent et multiplient les périodes de transition diphasiques en variant le débit de l'eau, ou de l'air injecté, et en répétant cette séquence à plusieurs reprises.

La courbe 18 des rejets selon l'invention est constituée de trois pics correspondant aux trois pulsations 16 d'eau injectée.

Par contre, le rétro-lavage sans pulsation (courbe 17) ne comporte qu'un seul pic correspondant sensiblement au premier pic de la courbe 18. La concentration des matières en suspension dans les rejets diminuent ensuite constamment.

Il apparaît ainsi que la solution selon l'invention permet un décolmatage beaucoup plus efficace.

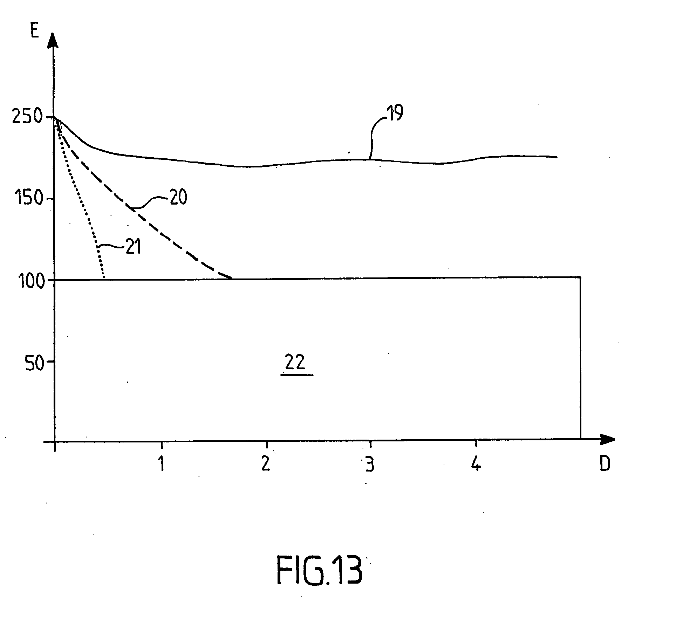

Fig.13 est un diagramme comparatif de différents modes de rétro-lavage. La durée de filtration D exprimée en semaines est portée en abscisses tandis que la perméabilité en filtration E de la membrane exprimée en l/h.m².bar (litres par heure, par m² de membrane et par bar) est portée en ordonnées. Plus la membrane est colmatée, plus la perméabilité en filtration est faible.

La courbe 19 correspond au cas du rétro-lavage eau-air pulsé, selon l'invention. La courbe en tirets 20 correspond au rétro-lavage eau-air sans pulsation. La courbe 21 en pointillé correspond au rétro-lavage à l'eau seule.

La courbe 19 fait apparaître clairement que selon l'invention, la perméabilité en filtration de la membrane est maintenue dans le temps à un niveau sensiblement constant, grâce au lavage et décolmatage efficace, nettement supérieur à celui des courbes 20 et 21 qui sont décroissantes avec une pente plus forte pour la courbe 21.

Lorsque la perméabilité en filtration a chuté à la valeur 100 l/h.m².bar, une régénération chimique de la membrane doit être effectuée, ce qui correspond à la zone 22.

L'invention, en associant des pulsations de liquide à un écoulement continu de gaz, ou des pulsations de.gaz à un régime continu de liquide lors des rétro-lavages de décolmatage de membranes de filtrations permet ainsi d'augmenter de façon surprenante et significative l'élimination du gâteau de filtration par rapport à un écoulement constant.

La durée entre régénérations chimiques s'en trouve notablement augmentée. A titre d'exemple non limitatif, pour des conditions similaires, l'intervalle de temps entre deux régénérations chimiques est multiplié par 5 grâce à l'invention, par rapport à un procédé classique.

Le gain de perméabilité est augmenté, ce qui permet de diminuer la fréquence d'application de ce type de décolmatage.

La quantité d'eau mise en oeuvre est significativement diminuée permettant un gain de productivité du système.

Le colmatage est réduit et permet une diminution de la fréquence des régénérations chimiques.

## Revendications

1. Procédé de nettoyage de membranes de filtration, du type fibres creuses à peau interne, montées à l'intérieur d'un carter pour la filtration d'un liquide, avec délimitation d'un compartiment concentrat où s'accumulent les matières retenues tant en suspension que sur les membranes, et d'un compartiment perméat collectant le liquide filtré, comprenant les étapes consistant à :
a) vider le compartiment concentrat pour évacuer le liquide à filtrer qu'il contient et les matières en suspension, puis
b) effectuer un rétro-lavage par passage de liquide du compartiment perméat vers le compartiment concentrat au travers des membranes pour décoller et évacuer les impuretés déposées sur celles-ci tout en faisant circuler un gaz dans le compartiment concentrat,
**caractérisé en ce que** des pulsations (15,16) du gaz et/ou du liquide de rétro-lavage sont provoquées pendant au moins une phase du rétro-lavage.

2. Procédé selon la revendication 1, **caractérisé en ce que** le nombre de pulsation au cours d'une phase est de 1 à 10.

3. Procédé selon la revendication 1 ou 2 **caractérisé en ce que** la durée des pulsations est de 2 à 60 secondes.

4. Procédé selon l'une des revendications précédentes, **caractérisé en ce que** le liquide de lavage est injecté de façon pulsée dans le compartiment concentrat alors que la circulation de gaz, notamment d'air, est maintenue constante dans le compartiment concentrat.

5. Procédé selon l'une des revendications 1 à 3, **caractérisé en ce que** le gaz est injecté de façon pulsée dans le compartiment concentrat alors que le circulation de liquide est maintenue constante dans le compartiment concentrat.

6. Procédé selon l'une des revendications précédentes, **caractérisé en ce que**, lors du rétro-lavage, la vitesse de passage du liquide à l'intérieur des membranes est de 0,1 à 1 m³/ m².s.

7. Procédé selon l'une des revendications précédentes, **caractérisé en ce que**, lors du rétro-lavage, la vitesse de passage du gaz est de 0 à 4 Nm³/ m².s.

8. Procédé selon l'une des revendications précédentes, **caractérisé en ce que** l'étape de vidange du compartiment concentrat est terminée par l'utilisation d'un débit de gaz pour accélérer et améliorer la vidange.

9. Procédé selon l'une des revendications précédentes, **caractérisé en ce que** le liquide à filtrer est de l'eau, que le liquide utilisé pour le rétro-lavage est de l'eau filtrée, tandis que le gaz que l'on fait circuler est de l'air.

10. Procédé selon l'une des revendications précédentes, **caractérisé en ce que** le liquide filtré injecté lors du rétro-lavage vers le compartiment concentrat au travers des membranes est préalablement additionné de l'un des produits suivants : agent oxydant tel que composés chlorés, peroxydes, composés chimiques acides ou basiques.

11. Procédé selon l'une des revendications précédentes, **caractérisé en ce que** le rétro-lavage comprend au moins un cycle de deux phases, à savoir une phase avec deux fluides, liquide et gaz, dont l'un est pulsé, et une autre phase avec celui des fluides qui n'est pas pulsé.

12. Procédé selon la revendication 11, **caractérisé en ce que** le nombre des cycles de deux phases au cours d'un même rétro-lavage est compris entre 1 est 10.

13. Installation pour la mise en oeuvre d'un procédé selon l'une des revendications précédentes, comprenant des membranes de filtration en fibres creuses montées à l'intérieur d'un carter, avec délimitation d'un compartiment concentrat et d'un compartiment.perméat, une pompe d'alimentation et une vanne d'alimentation du compartiment concentrât, une vanne de vidange, une pompe de rétro-lavage et une vanne de rétro-lavage, un surpresseur de gaz relié au compartiment concentrat, **caractérisée en ce que** :
- les fibres creuses des membranes sont à peau interne,
- une électrovanne (5) est montée sur une canalisation reliant le surpresseur (6) de gaz à un orifice (E2) connecté à l'espace intérieur des fibres creuses,
- et **en ce qu'**elle comporte un circuit (5a) d'alimentation par impulsions électriques de l'électrovanne pour commander des pulsations du débit de gaz.

## Claims

1. A method of cleaning filter membranes of the hollow-fibre type with an inner skin, mounted inside a casing for filtering a liquid, with delimitation of a concentrate compartment where the matter retained both in suspension and on the membranes accumulate, and of a permeate compartment which collects the filtered liquid, comprising the steps consisting in:
a) draining the concentrate compartment to evacuate the liquid to be filtered contained therein and the suspended matter, then
b) performing a backwash by passing liquid from the permeate compartment to the concentrate compartment through the membranes to detach and evacuate the impurities deposited thereon, while circulating a gas in the concentrate compartment,
**characterised in that** pulses (15, 16) of the backwashing liquid and/or gas are induced during at least one backwashing phase.

2. The method according to Claim 1, **characterised in that** the number of pulses during a phase ranges from 1 to 10.

3. The method according to claim 1 or 2, **characterised in that** the duration of the pulses ranges from 2 to 60 seconds.

4. The method according to one of the preceding claims, **characterised in that** the washing liquid is injected in a pulsed manner into the concentrate compartment whilst the circulation of gas, particularly air, is kept constant in the concentrate compartment.

5. The method according to one of claims 1 to 3, **characterised in that** the gas is injected in a pulsed manner into the concentrate compartment whilst the circulation of liquid is kept constant in the concentrate compartment.

6. The method according to one of the preceding claims, **characterised in that**, during the backwash, the speed of passage of the liquid inside the membranes is between 0.1 and 1 m³/m².s.

7. The method according to one of the preceding claims, **characterised in that**, during the backwash, the speed of passage of the gas is between 0 and 4 Nm³/m².s.

8. The method according to one of the preceding claims, **characterised in that** the concentrate compartment drainage step is terminated by using a gas flow to accelerate and improve the drainage.

9. The method according to one of the preceding claims, **characterised in that** the liquid to be filtered is water, the liquid used for the backwash is filtered water, whilst the gas which is circulated is air.

10. The method according to one of the preceding claims, **characterised in that** the filtered liquid injected during the backwash to the concentrate compartment through the membranes is augmented beforehand with one of the following substances:
oxidizing agent such as chlorine compounds, peroxides, acidic or basic chemical compounds.

11. The method according to one of the preceding claims, **characterised in that** the backwash includes at least one two-phase cycle, i.e. one phase with two fluids, liquid and gas, one ofwhich is pulsed, and one other phase with that fluid which is not pulsed.

12. The method according to Claim 11, **characterised in that** the number of two-phase cycles during a single backwash is between 1 and 10.

13. An installation for Implementing a method according to one of the preceding claims, including filter membranes made of hollow fibres mounted inside a casing, with delimitation of a concentrate compartment and a permeate compartment, a feed pump and a feed valve for the concentrate compartment, a drain valve, a backwash pump and a backwash valve, a gas compressor linked to the concentrate compartment, **characterised in that**:
- the hollow fibres of the membranes have an internal skin,
- an electrovalve (5) is mounted on a canalisation linking the gas compressor (6) to a port (E2) connected to the inner space of the hollow fibres,
- and **in that** it comprises a circuit (5a) for feeding the electrovalve by means of electric pulses in order to control the pulses of the gas flow.

## Patentansprüche

1. Verfahren zum Reinigen von Filtermembranen des Typs aus Hohlfasern mit Innenhaut, die innerhalb eines Gehäuses zum Filtern einer Flüssigkeit angebracht sind, wobei ein Konzentrat-Teilraum, in dem sich die ausgefilterten Stoffe sowohl in Suspension als auch auf den Membranen ansammeln, und ein Permeat-Teilraum, der die gefilterte Flüssigkeit sammelt, voneinander abgegrenzt rind, umfassend die Schritte, die darin bestehen:
a) den Konzentrat-Teilraum zu entleeren, um die darin enthaltene zu filternde Flüssigkeit und die in Suspension befindlichen Stoffe zu entfernen, anschließend
b) eine Rückspülung mittels Durchlauf einer Flüssigkeit von dem Permeat-Teilraum zu dem Konzentrat-Teilraum durch die Membranen hindurch durchzuführen, um die auf diesen abgelagerten Verunreinigungen abzulösen und abzuführen, wobei man zugleich ein Gas in dem Konzentrat-Teilraum zirkulieren lässt, **dadurch gekennzeichnet, dass** während wenigstens einer Phase der Rückspülung Druckimpulse (15, 16) des Gases und/oder der Rückspülflüssigkeit herbeigeführt werden.

2. Verfahren nach Anspruch 1, **dadurch gekennzeichnet, dass** die Anzahl der Druckimpulse während einer Phase zwischen 1 und 10 liegt.

3. Verfahren nach Anspruch 1 oder 2, **dadurch gekennzeichnet, dass** die Dauer der Druckimpulse 2 bis 60 Sekunden beträgt.

4. Verfahren nach einem der vorstehenden Ansprüche, **dadurch gekennzeichnet, dass** die Spülflüssigkeit pulsierend in den Konzentrat-Teilraum eingespritzt wird, während die Zirkulation von Gas, insbesondere Luft, in dem Konzentrat-Teilraum konstant gehalten wird.

5. Verfahren nach einem der Ansprüche 1 bis 3, **dadurch gekennzeichnet, dass** das Gas pulsierend in den Konzentrat-Teilraum eingespritzt wird, während die Flüssigkeitszirkulation in dem Konzentrat-Teilraum konstant gehalten wird.

6. Verfahren nach einem der vorstehenden Ansprüche, **dadurch gekennzeichnet, dass** während der Rückspülung die Durchlaufgeschwindigkeit der Flüssigkeit innerhalb der Membranen 0,1 bis 1 m³ / m² · s beträgt.

7. Verfahren nach einem der vorstehenden Ansprüche, **dadurch gekennzeichnet, dass** die Durchlaufgeschwindigkeit des Gases während der Rückspülung 0 bis 4 Nm³ / m² · s beträgt.

8. Verfahren nach einem der vorstehenden Ansprüche, **dadurch gekennzeichnet, dass** der Schritt des Entleerens des Konzentrat-Teilraums durch Einsatz eines Gasstroms zum Beschleunigen und Verbessern der Entleerung abgeschlossen wird.

9. Verfahren nach einem der vorstehenden Anspruch, **dadurch gekennzeichnet, dass** die zu filternde Flüssigkeit Wasser ist, dass die für die Rückspülung verwendete Flüssigkeit gefiltertes Wasser ist, während das Gas, das man zirkulieren lässt, Luft ist.

10. Verfahren nach einem der vorstehenden Ansprüche, **dadurch gekennzeichnet, dass** der während der Rückspülung durch die Membranen hindurch in Richtung des Konzentrat-Teilraums eingespritzten gefilterten Flüssigkeit zuvor eines der folgenden Produkte zugesetzt wird: Oxidationsmittel wie Chlorverbindungen, Peroxide, saure oder basische chemische Verbindungen.

11. Verfahren nach einem der vorstehenden Ansprüche, **dadurch gekennzeichnet, dass** die Rückspülung wenigstens einen Zweiphasen-Zyklus umfasst, nämlich mit einer Phase mit zwei Fluiden, Flüssigkeit und Gas, von denen man eines pulsieren lässt, und mit einer weiteren Phase mit demjenigen der Fluide, das man nicht pulsieren lässt.

12. Verfahren nach Anspruch 11, **dadurch gekennzeichnet, dass** die Anzahl von Zweiphasen-Zyklen während ein und desselben Rückspülvorgangs zwischen 1 und 10 liegt.

13. Anlage zum Durchführen eines Verfahrens nach einem der vorstehenden Ansprüche, die innerhalb eines Gehäuses angeordnete Hohlfaser-Filtermembranen, wobei ein Konzentrat-Teilraum und ein Permeat-Teilraum voneinander abgegrenzt sind, eine Speisepumpe und ein Ventil zum Beaufschlagen des Konzentrat-Teilraums, ein Entleerungsventil, eine Rückspülpumpe und ein Rückspülventil, einen mit dem Konzentrat-Teilraum verbundenen Gasdruckverstärker umfasst, **dadurch gekennzeichnet, dass**:
- die Hohlfasern der Membranen eine Innenhaut aufweisen,
- ein Elektroventil (5) an einer Rohrleitung angebracht ist, die den Gasdruckverstärker (6) mit einer an den Innenraum der Hohlfasern angeschlossenen Öffnung (E2) verbindet,
- und dass sie einen Kreis (5a) zum Beaufschlagen des Elektroventils mit elektrischen Impulsen, um Druckimpulse des Gasdurchflusses zu steuern, umfasst.
